# EUROPÄISCHE PATENTSCHRIFT

(11) **EP 4 261 012 B1**
(45) Veröffentlichungstag und Bekanntmachung des Hinweises auf die Patenterteilung: **23.10.2024**
(21) Anmeldenummer: 22167831.1
(22) Anmeldetag: 12.04.2022
(51) Int. Cl.: B29C 53/58, B29D 23/00, B32B 27/00, F16L 9/16

(54) **VERFAHREN ZUR HERSTELLUNG EINES FLEXIBLEN, THERMOPLASTISCHEN VERBUNDROHRS SOWIE THERMOPLASTISCHES VERBUNDROHR**
THERMOPLASTIC COMPOSITE PIPE AND METHOD OF MAKING A FLEXIBLE THERMOPLASTIC COMPOSITE PIPE
PROCÉDÉ DE FABRICATION D'UN TUBE COMPOSITE THERMOPLASTIQUE SOUPLE, AINSI QUE TUBE COMPOSITE THERMOPLASTIQUE

(43) Veröffentlichungstag der Anmeldung: 18.10.2023
(73) Patentinhaber: Fibron Pipe GesmbH, 4300 St. Valentin (AT)
(72) Erfinder: Keßler, Andreas, 82049 Pullach im Isartal (DE)
(74) Vertreter: Ege Lee & Roider Patentanwälte

(56) Entgegenhaltungen:
- WO-A1-2008/115857
- WO-A1-2010/026749
- DE-A1- 102011 017 328
- US-A- 3 654 967
- US-A- 5 893 956
- US-A1- 2014 238 977

## Beschreibung

Die Erfindung betrifft ein Verfahren zur Herstellung eines flexiblen, thermoplastischen Verbundrohrs.

Flexible Verbundrohre sind oft faserverstärke Kunststoffrohre, die zum Transport unterschiedlicher Medien, wie Wasser, Öl oder Gas, dienen, beispielsweise bei der Onshore- oder Offshore-Förderung für den Transport an Land oder über dem Meeresboden. Flexible, thermoplastische Verbundrohre finden auch beim Fernwärmeleitungsbau Verwendung, um Medien für Wasser- und Heizungsversorgungsanlagen zu transportieren. Insbesondere weisen thermoplastische Verbundrohre ("Thermoplastic Composite Pipes", TCP) eine hohe Druckbeständigkeit mit Arbeitsdrücken zwischen 40 bis 300 bar auf und ermöglichen so einen Transport des Mediums über lange Strecken.

Thermoplastische Verbundrohre weisen üblicherweise eine Innenlage aus ein- oder mehrschichtigen Innenliner aus thermoplastischem Material auf. Auf diese wird eine Kompositlage, zum Beispiel durch Aufwickeln faserverstärkter Tapes, aufgebracht. Derartige Verbundrohre sind beispielsweise aus dem Dokument WO 95/07428 A1 oder WO 2017/048117 A1 bekannt. Weiterer technologischer Hintergrund kann der US 2014/238977 A1 und der DE 10 2011 017 328 A1 entnommen werden.

Der Erfindung liegt die Aufgabe zugrunde, ein eingangs genanntes Verfahren zur Herstellung eines flexiblen, thermoplastischen Verbundrohrs strukturell und/oder funktionell zu verbessern.

Die Aufgabe wird gelöst mit einem Verfahren zur Herstellung eines flexiblen, thermoplastischen Verbundrohrs mit den Merkmalen des Anspruchs 1. Vorteilhafte Ausführungen und/oder Weiterbildungen sind Gegenstand der Unteransprüche.

Ein Verfahren kann zur Herstellung eines Verbundrohrs, insbesondere eines thermoplastischen Verbundrohrs, sein und/oder dienen. Das Verbundrohr kann ein flexibles und/oder biegbares, thermoplastisches Verbundrohr sein. Das Verbundrohr kann zum Transport von unterschiedlichen Medien, wie beispielsweise flüssige oder gasförmige Medien, wie Wasser, z.B. Heizwasser, Kühlwasser oder Trinkwasser, Öl, z.B. Rohöl oder Erdöl, Gas, z.B. Rohgas oder Erdgas, Öl-Wasser-Gemisch und/oder Öl-Gas-Gemisch ausgebildet werden. Das Verbundrohr kann zum Einsatz bei Wasser-, Öl- oder Gasnetzen bzw. Wasser-, Öl- oder Gasleitungen ausgebildet werden. Das Verbundrohr kann zum Einsatz bei der Onshore- oder Offshore-Förderung bzw. dem Onshore- oder Offshore-Transport für den Transport eines Mediums an Land oder über dem Meeresboden ausgebildet werden.

Das Verbundrohr kann eine Verstärkungsschicht aufweisen und/oder mit einer Verstärkungsschicht hergestellt werden. Die Verstärkungsschicht kann mehrere Lagen umfassen und/oder daraus gebildet bzw. hergestellt werden. Die mehreren Lagen können jeweils zumindest ein verstärkendes Band, beispielsweise zwei verstärkende Bänder, umfassen und/oder daraus gebildet bzw. hergestellt werden.

Das Verfahren kann den Schritt umfassen: Herstellen, beispielsweise Extrudieren oder Pultrieren, eines Kunststoffrohrs. Das Kunststoffrohr kann ein thermoplastisches Kunststoffrohr sein. Das Kunststoffrohr kann ein Grundrohr, Innenrohr, Liner und/oder Innen-Liner sein. Das Verbundrohr und/oder das Kunststoffrohr kann ein nichtmetallisches Rohr sein. Das Kunststoffrohr kann aus einem thermoplastischen Kunststoff hergestellt, beispielsweise extrudiert oder pultriert, sein oder werden. Der thermoplastische Kunststoff kann Polyolefin, Polyethylen, Polyethylen mit hoher Dichte (HDPE), Polypropylen oder Polyamid sein oder umfassen. Das Kunststoffrohr kann mittels eines Extrusionsverfahrens oder Pultrusionsverfahrens hergestellt sein oder werden. Beispielsweise kann das Kunststoffrohr mittels eines Extruders und/oder eines Rohrkopfes hergestellt bzw. extrudiert sein oder werden.

Das Verfahren kann den Schritt umfassen: Bereitstellen des Kunststoffrohrs. Das Bereitstellen des Kunststoffrohrs kann das Aufwickeln und/oder Abwickeln des Kunststoffrohrs, beispielsweise auf bzw. von einer Trommelvorrichtung umfassen. Das Aufwickeln und/oder Abwickeln kann mittels zumindest einer Abzugsvorrichtung erfolgen. Die zumindest eine Abzugsvorrichtung kann ein Bandabzug sein.

Das Verfahren kann den Schritt umfassen: Vorwärmen und/oder Vorheizen des Kunststoffrohrs und/oder dessen Rohrkörperoberfläche, beispielsweise auf eine Vorheiztemperatur. Das Vorwärmen und/oder Vorheizen kann mittels einer Vorheizeinrichtung, beispielsweise ein Vorheizofen, wie Infrarot-Vorheizofen, erfolgen.

Das Verfahren kann den Schritt umfassen: Aufbringen einer ersten Lage einer Verstärkungsschicht auf das Kunststoffrohr. Das Aufbringen kann ein Wickeln, wie Umwickeln, sein oder umfassen. Das Wickeln kann ein spiralförmiges und/oder schraubenförmiges Umwickeln sein oder umfassen.

Die erste Lage der Verstärkungsschicht kann ein erstes verstärkendes Band aufweisen. Das erste verstärkende Band der ersten Lage der Verstärkungsschicht kann im Wesentlichen spiralförmig und/oder schraubenförmig in einer ersten spiralförmigen und/oder schraubenförmigen Richtung, wie erste Wickelrichtung, um das Kunststoffrohr gewickelt werden. Beispielsweise kann das erste verstärkende Band der ersten Lage der Verstärkungsschicht im Wesentlichen spiralförmig in der ersten spiralförmigen Richtung, wie erste Wickelrichtung, so um das Kunststoffrohr gewickelt werden, dass mehrere axial beabstandete Bandsektionen und zwischen diesen Lücken bzw. Spalte entstehen.

Die erste Lage der Verstärkungsschicht kann ein zweites verstärkendes Band aufweisen. Das zweite verstärkende Band der ersten Lage der Verstärkungsschicht kann im Wesentlichen spiralförmig und/oder schraubenförmig in der ersten spiralförmigen und/oder schraubenförmigen Richtung, wie erste Wickelrichtung, um das Kunststoffrohr gewickelt werden. Beispielsweise kann das zweite verstärkende Band der ersten Lage der Verstärkungsschicht im Wesentlichen spiralförmig in der ersten spiralförmigen Richtung, wie erste Wickelrichtung, so um das Kunststoffrohr gewickelt werden, dass mehrere axial beabstandete Bandsektionen entstehen, die in den Lücken bzw. Spalten des ersten verstärkenden Bands der ersten Lage der Verstärkungsschicht angeordnet sind. Das erste verstärkende Band der ersten Lage der Verstärkungsschicht und das zweite verstärkende Band der ersten Lage der Verstärkungsschicht können im Wesentlichen gleichzeitig oder, beispielsweise unmittelbar, hintereinander um das Kunststoffrohr gewickelt werden.

Das Wickeln bzw. Umwickeln kann beispielsweise mittels einer zweispuligen Wickelvorrichtung, wie Bandierer, erfolgen. Das Wickeln bzw. Umwickeln kann mit einer, insbesondere vordefinierten, ersten Zugspannung erfolgen. Das erste verstärkende Band der ersten Lage der Verstärkungsschicht und das zweite verstärkende Band der ersten Lage der Verstärkungsschicht können, insbesondere in axialer Richtung, direkt und/oder unmittelbar nebeneinander, insbesondere im Wesentlichen Kante an Kante, und/oder nicht überlappend angeordnet werden. Das erste verstärkende Band der ersten Lage der Verstärkungsschicht und das zweite verstärkende Band der ersten Lage der Verstärkungsschicht können, insbesondere in axialer Richtung, im Wesentlichen Kante an Kante aneinanderliegend und/oder fugenlos angeordnet werden. Die erste Lage der Verstärkungsschicht kann ein Monoauftrag, wie Monolagenauftrag, sein bzw. als Monoauftrag hergestellt / realisiert werden.

Das Verfahren kann den Schritt umfassen: Konsolidieren der ersten Lage der Verstärkungsschicht mit dem Kunststoffrohr. Das Konsolidieren kann das Erwärmen und/oder Aufheizen der ersten Lage der Verstärkungsschicht und/oder des Kunststoffrohrs, insbesondere dessen Rohrkörperoberfläche, umfassen. Das Konsolidieren kann das Verbinden, beispielsweise schmelzbundartig Verbinden und/oder Verschmelzen, der ersten Lage der Verstärkungsschicht mit dem Kunststoffrohr umfassen. Eine solche Verbindung kann auch als "fester Verbund" und/oder "bonded", wie "fully bonded", bezeichnet werden.

Zumindest die erste Lage der Verstärkungsschicht kann auf eine erste Temperatur gebracht werden. Die erste Lage der Verstärkungsschicht und das Kunststoffrohr, beispielsweise dessen Rohrkörperoberfläche, können auf die erste Temperatur gebracht werden. Die erste Temperatur kann eine vordefinierte und/oder vorgegebene Temperatur sein. Die erste Temperatur kann die Temperatur der ersten Lage der Verstärkungsschicht und/oder des Kunststoffrohrs, beispielsweise dessen Rohrkörperoberfläche, sein. Die erste Temperatur kann zu einer zumindest teilweisen Aufschmelzung der ersten Lage der Verstärkungsschicht führen, insbesondere so, dass die erste Lage der Verstärkungsschicht und das Kunststoffrohr miteinander fest, beispielsweise schmelzverbundartig, verbunden werden. Zusätzlich kann die erste Temperatur zu einer zumindest teilweisen Aufschmelzung des Kunststoffrohrs, beispielsweise dessen Rohrkörperoberfläche, führen.

Das Konsolidieren bzw. Erwärmen und/oder Aufheizen der ersten Lage der Verstärkungsschicht und/oder des Kunststoffrohrs kann durch Wärmestrahlung erfolgen. Das Konsolidieren bzw. Erwärmen und/oder Aufheizen der ersten Lage der Verstärkungsschicht und/oder des Kunststoffrohrs kann mittels einer ersten Heizeinrichtung erfolgen. Die erste Heizeinrichtung kann ein Wärmestrahler bzw. Heizstrahler und/oder eine Infrarot-Heizeinrichtung, wie Infrarotofen, sein. Das Konsolidieren bzw. Erwärmen und/oder Aufheizen kann mit einer Toleranz von etwa 1 bis 5 °C, vorzugsweise etwa 1 bis 2 °C erfolgen. Das Konsolidieren bzw. Erwärmen und/oder Aufheizen kann um 360° bzw. um den gesamten Umfang, insbesondere der ersten Lage der Verstärkungsschicht und/oder des Kunststoffrohrs, erfolgen. Die erste Lage der Verstärkungsschicht und/oder das Kunststoffrohr können 360° bestrahlt, wie wärmebestrahlt werden. Die erste Heizeinrichtung kann ein 360° Wärme- und/oder Heizstrahler sein. Das Kunststoffrohr kann zusammen mit der ersten Lage der Verstärkungsschicht durch die erste Heizeinrichtung hindurchgeführt werden. Insbesondere das mit der ersten Lage der Verstärkungsschicht umwickelte Kunststoffrohr kann durch die erste Heizeinrichtung hindurchgeführt werden.

Das Verfahren kann den Schritt umfassen: Aufbringen einer zweiten Lage der Verstärkungsschicht auf die erste Lage der Verstärkungsschicht. Das Aufbringen kann ein Wickeln, wie Umwickeln, sein oder umfassen. Das Wickeln kann ein spiralförmiges und/oder schraubenförmiges Umwickeln sein oder umfassen.

Die zweite Lage der Verstärkungsschicht kann ein erstes verstärkendes Band aufweisen. Das erste verstärkende Band der zweiten Lage der Verstärkungsschicht kann im Wesentlichen spiralförmig und/oder schraubenförmig in einer zweiten spiralförmigen und/oder schraubenförmigen Richtung, wie zweite Wickelrichtung, um die erste Lage der Verstärkungsschicht gewickelt werden. Beispielsweise kann das erste verstärkende Band der zweiten Lage der Verstärkungsschicht im Wesentlichen spiralförmig in der zweiten spiralförmigen Richtung, wie zweite Wickelrichtung, so um die erste Lage der Verstärkungsschicht gewickelt werden, dass mehrere axial beabstandete Bandsektionen und zwischen diesen Lücken bzw. Spalte entstehen.

Die zweite Lage der Verstärkungsschicht kann ein zweites verstärkendes Band aufweisen. Das zweite verstärkende Band der zweiten Lage der Verstärkungsschicht kann im Wesentlichen spiralförmig und/oder schraubenförmig in der zweiten spiralförmigen Richtung, wie zweite Wickelrichtung, um die erste Lage der Verstärkungsschicht gewickelt werden. Beispielsweise kann das zweite verstärkende Band der zweiten Lage der Verstärkungsschicht im Wesentlichen spiralförmig in der zweiten spiralförmigen Richtung, wie zweite Wickelrichtung, so um die erste Lage der Verstärkungsschicht gewickelt werden, dass mehrere axial beabstandete Bandsektionen entstehen, die in den Lücken bzw. Spalten des ersten verstärkenden Bands der zweiten Lage der Verstärkungsschicht angeordnet sind. Das erste verstärkende Band der zweiten Lage der Verstärkungsschicht und das zweite verstärkende Band der zweiten Lage der Verstärkungsschicht können im Wesentlichen gleichzeitig oder, beispielsweise unmittelbar, hintereinander um die erste Lage der Verstärkungsschicht gewickelt werden.

Das Wickeln bzw. Umwickeln kann beispielsweise mittels einer zweispuligen Wickelvorrichtung, wie Bandierer, erfolgen. Das Wickeln bzw. Umwickeln kann mit einer, insbesondere vordefinierten, zweiten Zugspannung erfolgen. Die erste Zugspannung und die zweite Zugspannung können gleich oder unterschiedlich sein. Die erste Zugspannung kann größer oder kleiner als die zweite Zugspannung sein. Die zweite spiralförmige Richtung bzw. zweite Wickelrichtung kann im Wesentlichen entgegengesetzt zur ersten spiralförmigen Richtung bzw. ersten Wickelrichtung sein. Das erste verstärkende Band der zweiten Lage der Verstärkungsschicht und das zweite verstärkende Band der zweiten Lage der Verstärkungsschicht können, insbesondere in axialer Richtung, direkt und/oder unmittelbar nebeneinander, insbesondere im Wesentlichen Kante an Kante, und/oder nicht überlappend angeordnet werden. Das erste verstärkende Band der zweiten Lage der Verstärkungsschicht und das zweite verstärkende Band der zweiten Lage der Verstärkungsschicht können, insbesondere in axialer Richtung, im Wesentlichen Kante an Kante aneinanderliegend und/oder fugenlos angeordnet werden. Die zweite Lage der Verstärkungsschicht kann ein Monoauftrag, wie Monolagenauftrag, sein bzw. als Monoauftrag hergestellt / realisiert werden.

Das Verfahren kann den Schritt umfassen: Konsolidieren der zweiten Lage der Verstärkungsschicht mit zumindest der ersten Lage der Verstärkungsschicht. Dabei kann die zweite Lage der Verstärkungsschicht mit der ersten Lage der Verstärkungsschicht und mit dem Kunststoffrohr konsolidiert werden. Das Konsolidieren kann das Erwärmen und/oder Aufheizen der zweiten Lage der Verstärkungsschicht und/oder der ersten Lage der Verstärkungsschicht umfassen. Zusätzlich kann das Konsolidieren auch das Erwärmen und/oder Aufheizen des Kunststoffrohrs, insbesondere dessen Rohrkörperoberfläche, umfassen. Das Konsolidieren kann das Verbinden, beispielsweise schmelzbundartig Verbinden und/oder Verschmelzen, der zweiten Lage der Verstärkungsschicht mit der ersten Lage der Verstärkungsschicht umfassen. Eine solche Verbindung kann auch als "fester Verbund" und/oder "bonded", wie "fully bonded", bezeichnet werden.

Zumindest die zweite Lage der Verstärkungsschicht kann auf eine zweite Temperatur gebracht werden. Die zweite Lage der Verstärkungsschicht und die erste Lage der Verstärkungsschicht können auf die zweite Temperatur gebracht werden. Zusätzlich kann das Kunststoffrohr, beispielsweise dessen Rohrkörperoberfläche, auf die zweite Temperatur gebracht werden. Die zweite Temperatur kann eine vordefinierte und/oder vorgegebene Temperatur sein. Die zweite Temperatur kann die Temperatur der zweiten Lage der Verstärkungsschicht und/oder der ersten Lage der Verstärkungsschicht und/oder des Kunststoffrohrs, beispielsweise dessen Rohrkörperoberfläche, sein. Die zweite Temperatur kann zu einer zumindest teilweisen Aufschmelzung der zweiten Lage der Verstärkungsschicht führen, insbesondere so, dass die zweite Lage der Verstärkungsschicht und die erste Lage der Verstärkungsschicht miteinander fest, beispielsweise schmelzverbundartig, verbunden werden. Zusätzlich kann die zweite Temperatur zu einer zumindest teilweisen Aufschmelzung der ersten Lage der Verstärkungsschicht und/oder des Kunststoffrohrs führen. Die erste Temperatur und die zweite Temperatur können im Wesentlichen gleich sein. Alternativ können die erste Temperatur und die zweite Temperatur unterschiedliche sein. Die erste Temperatur kann größer oder kleiner als die zweite Temperatur sein.

Das Konsolidieren bzw. Erwärmen und/oder Aufheizen der zweiten Lage der Verstärkungsschicht und/oder der ersten Lage der Verstärkungsschicht kann durch Wärmestrahlung erfolgen. Das Konsolidieren bzw. Erwärmen und/oder Aufheizen der zweiten Lage der Verstärkungsschicht und/oder der ersten Lage der Verstärkungsschicht kann mittels einer zweiten Heizeinrichtung erfolgen. Die zweite Heizeinrichtung kann ein Wärmestrahler bzw. Heizstrahler und/oder eine Infrarot-Heizeinrichtung, wie Infrarotofen, sein. Das Konsolidieren bzw. Erwärmen und/oder Aufheizen kann mit einer Toleranz von etwa 1 bis 5 °C, vorzugsweise etwa 1 bis 2 °C erfolgen. Das Konsolidieren bzw. Erwärmen und/oder Aufheizen kann um 360° bzw. um den gesamten Umfang, insbesondere der zweiten Lage der Verstärkungsschicht und/oder der ersten Lage der Verstärkungsschicht und/oder des Kunststoffrohrs, erfolgen. Die zweite Lage der Verstärkungsschicht und/oder die erste Lage der Verstärkungsschicht können 360° bestrahlt, wie wärmebestrahlt werden. Die zweite Heizeinrichtung kann ein 360° Wärme- und/oder Heizstrahler sein. Das Kunststoffrohr kann zusammen mit der ersten Lage der Verstärkungsschicht und der zweiten Lage der Verstärkungsschicht durch die zweite Heizeinrichtung hindurchgeführt werden. Insbesondere das mit der zweiten Lage der Verstärkungsschicht umwickelte Kunststoffrohr kann durch die zweite Heizeinrichtung hindurchgeführt werden.

Das Verfahren kann den Schritt umfassen: Aufbringen wenigstens einer dritten Lage der Verstärkungsschicht auf die zweite Lage der Verstärkungsschicht. Das Aufbringen kann ein Wickeln, wie Umwickeln, sein oder umfassen. Das Wickeln kann ein spiralförmiges und/oder schraubenförmiges Umwickeln sein oder umfassen.

Die dritte Lage der Verstärkungsschicht kann ein erstes verstärkendes Band aufweisen. Das erste verstärkende Band der dritten Lage der Verstärkungsschicht kann im Wesentlichen spiralförmig und/oder schraubenförmig in einer dritten spiralförmigen und/oder schraubenförmigen Richtung, wie dritte Wickelrichtung, um die zweite Lage der Verstärkungsschicht gewickelt werden. Die dritte Lage der Verstärkungsschicht kann ein zweites verstärkendes Band aufweisen. Das zweite verstärkende Band der dritten Lage der Verstärkungsschicht kann im Wesentlichen spiralförmig und/oder schraubenförmig in der dritten spiralförmigen und/oder schraubenförmigen Richtung, wie dritte Wickelrichtung, um die zweite Lage der Verstärkungsschicht gewickelt werden. Beispielsweise kann das zweite verstärkende Band der dritten Lage der Verstärkungsschicht im Wesentlichen spiralförmig in der dritten spiralförmigen Richtung, wie dritte Wickelrichtung, so um die zweite Lage der Verstärkungsschicht gewickelt werden, dass sich das zweite verstärkende Band der dritten Lage der Verstärkungsschicht und das erste verstärkende Band der dritten Lage der Verstärkungsschicht abschnittsweise überlappen. Das erste verstärkende Band der dritten Lage der Verstärkungsschicht und das zweite verstärkende Band der dritten Lage der Verstärkungsschicht können einen Überlappungsbereich aufweisen bzw. so um die zweite Lage der Verstärkungsschicht gewickelt werden, dass sie einen Überlappungsbereich ausbilden. Der Überlappungsbereich kann im Wesentlichen über der Naht und/oder der im Wesentlichen aneinanderliegenden Kanten der ersten und/oder zweiten Lage der Verstärkungsschicht angeordnet / ausgebildet sein oder werden. Der Überlapp kann etwa 10% bis 70%, beispielsweise etwa 40% bis 60%, vorzugsweise etwa 50%, insbesondere der Bandbreite, betragen. Bei der Bandbreite kann es sich um die Bandbreite des ersten und/oder zweiten verstärkenden Bands der dritten Lage der Verstärkungsschicht handeln. Die wenigstens eine dritte Lage der Verstärkungsschicht kann ein Doppelauftrag, wie Doppellagenauftrag, sein bzw. als Doppelauftrag hergestellt / realisiert werden.

Das erste verstärkende Band der dritten Lage der Verstärkungsschicht und das zweite verstärkende Band der dritten Lage der Verstärkungsschicht können im Wesentlichen gleichzeitig oder, beispielsweise unmittelbar, hintereinander um die zweite Lage der Verstärkungsschicht gewickelt werden.

Das Wickeln bzw. Umwickeln kann beispielsweise mittels einer zweispuligen oder vierspuligen Wickelvorrichtung, wie Bandierer, erfolgen. Das Wickeln bzw. Umwickeln kann mit einer, insbesondere vordefinierten, dritten Zugspannung erfolgen. Die dritte Zugspannung und die erste Zugspannung können gleich oder unterschiedlich sein. Die dritte Zugspannung und die zweite Zugspannung können gleich oder unterschiedlich sein. Die dritte Zugspannung kann größer oder kleiner als die erste und/oder zweite Zugspannung sein. Beispielsweise kann die dritte Zugspannung etwa doppelt so groß sein als die erste und/oder zweite Zugspannung. Die dritte spiralförmige Richtung bzw. dritte Wickelrichtung kann im Wesentlichen der ersten spiralförmigen Richtung bzw. ersten Wickelrichtung oder im Wesentlichen der zweiten spiralförmigen Richtung bzw. zweiten Wickelrichtung entsprechen.

Das erste verstärkende Band der ersten Lage der Verstärkungsschicht und/oder das zweite verstärkende Band der ersten Lage der Verstärkungsschicht und/oder das erste verstärkende Band der zweiten Lage der Verstärkungsschicht und/oder das zweite verstärkende Band der zweiten Lage der Verstärkungsschicht und/oder das erste verstärkende Band der dritten Lage der Verstärkungsschicht und/oder das zweite verstärkende Band der dritten Lage der Verstärkungsschicht kann ein verstärkendes Band umfassen bzw. sein, welches mit Kunststoff imprägnierte und/oder beschichtete Fasern aufweist. Der Kunststoff kann ein thermoplastischer Kunststoff sein. Der Kunststoff kann beispielsweise Polyolefin, Polyethylen, Polyethylen mit hoher Dichte (HDPE), Polypropylen oder Polyamid sein oder aufweisen. Die Fasern können unidirektional angeordnet und/oder ausgerichtet sein oder werden. Die Fasern können Glasfasern und/oder Kunststofffasern und/oder Kohlefasern und/oder Aramidfasern und/oder Basaltfasern und/oder keramische Fasern sein oder aufweisen. Der Querschnitt der Fasern kann kreisförmig, rechteckig, oval, elliptisch oder kokonförmig sein. Die Fasern können als Kurzfasern, Langfasern oder Endlosfasern ausgebildet sein. Die Fasern können Faserstränge ausgebildet sein oder werden. Die Fasern können als Gewebe oder Gewirk oder mit einer unidirektionalen Faserlage ausgebildet und/oder angeordnet sein oder werden. Die erste und/oder zweite und/oder dritte Lage aus verstärkendem Band kann auch als Tape, wie faserverstärktes Tape, bezeichnet werden. Die erste und/oder zweite und/oder dritte Lage aus verstärkendem Band kann beispielsweise mittels eines Imprägnierverfahrens, Schmelzauftragverfahrens, Schmelzimprägnierverfahrens, Pulverimprägnierverfahrens oder Pultrusionsverfahrens hergestellt sein oder werden.

Das Verfahren kann den Schritt umfassen: Konsolidieren der wenigstens einen dritten Lage der Verstärkungsschicht mit zumindest der zweiten Lage der Verstärkungsschicht. Dabei kann die wenigstens eine dritte Lage der Verstärkungsschicht mit der zweiten Lage der Verstärkungsschicht und mit der ersten Lage der Verstärkungsschicht konsolidiert werden. Auch kann die wenigstens eine dritte Lage der Verstärkungsschicht mit der zweiten Lage der Verstärkungsschicht, mit der ersten Lage der Verstärkungsschicht und mit dem Kunststoffrohr konsolidiert werden. Das Konsolidieren kann das Erwärmen und/oder Aufheizen der dritten Lage der Verstärkungsschicht und/oder der zweiten Lage der Verstärkungsschicht umfassen. Zusätzlich kann das Konsolidieren auch das Erwärmen und/oder Aufheizen der ersten Lage der Verstärkungsschicht umfassen. Zusätzlich kann das Konsolidieren auch das Erwärmen und/oder Aufheizen des Kunststoffrohrs, insbesondere dessen Rohrkörperoberfläche, umfassen. Das Konsolidieren kann das Verbinden, beispielsweise schmelzbundartig Verbinden und/oder Verschmelzen, der dritten Lage der Verstärkungsschicht mit der zweiten Lage der Verstärkungsschicht umfassen. Eine solche Verbindung kann auch als "fester Verbund" und/oder "bonded", wie "fully bonded", bezeichnet werden.

Zumindest die dritte Lage der Verstärkungsschicht kann auf eine dritte Temperatur gebracht werden. Die dritte Lage der Verstärkungsschicht und die zweite Lage der Verstärkungsschicht können auf die dritte Temperatur gebracht werden. Zusätzlich kann die erste Lage der Verstärkungsschicht und/oder das Kunststoffrohr, beispielsweise dessen Rohrkörperoberfläche, auf die dritte Temperatur gebracht werden. Die dritte Temperatur kann eine vordefinierte und/oder vorgegebene Temperatur sein. Die dritte Temperatur kann die Temperatur der dritten Lage der Verstärkungsschicht und/oder der zweiten Lage der Verstärkungsschicht und/oder der ersten Lage der Verstärkungsschicht und/oder des Kunststoffrohrs, beispielsweise dessen Rohrkörperoberfläche, sein. Die dritte Temperatur kann zu einer zumindest teilweisen Aufschmelzung der dritten Lage der Verstärkungsschicht führen, insbesondere so, dass die dritte Lage der Verstärkungsschicht und die zweite Lage der Verstärkungsschicht miteinander fest, insbesondere schmelzverbundartig, verbunden werden. Zusätzlich kann die dritte Temperatur zu einer zumindest teilweisen Aufschmelzung der zweiten Lage der Verstärkungsschicht und/oder der ersten Lage der Verstärkungsschicht und/oder des Kunststoffrohrs führen. Die dritte Temperatur und die erste und/oder zweite Temperatur können unterschiedlich sein. Die dritte Temperatur kann größer als die erste und/oder zweite Temperatur sein.

Das Konsolidieren bzw. Erwärmen und/oder Aufheizen der dritten Lage der Verstärkungsschicht und/oder der zweiten Lage der Verstärkungsschicht kann durch Wärmestrahlung erfolgen. Das Konsolidieren bzw. Erwärmen und/oder Aufheizen der dritten Lage der Verstärkungsschicht und/oder der zweiten Lage der Verstärkungsschicht kann mittels einer dritten Heizeinrichtung erfolgen. Die dritte Heizeinrichtung kann ein Wärmestrahler bzw. Heizstrahler und/oder eine Infrarot-Heizeinrichtung, wie Infrarotofen, sein. Das Konsolidieren bzw. Erwärmen und/oder Aufheizen kann mit einer Toleranz von etwa 1 bis 5 °C, vorzugsweise etwa 1 bis 2 °C erfolgen. Das Konsolidieren bzw. Erwärmen und/oder Aufheizen kann um 360° bzw. um den gesamten Umfang, insbesondere der dritten Lage der Verstärkungsschicht und/oder der zweiten Lage der Verstärkungsschicht und/oder des Kunststoffrohrs, erfolgen. Die dritte Lage der Verstärkungsschicht und/oder die zweite Lage der Verstärkungsschicht können 360° bestrahlt, wie wärmebestrahlt werden. Die dritte Heizeinrichtung kann ein 360° Wärme- und/oder Heizstrahler sein. Das Kunststoffrohr kann zusammen mit der ersten Lage der Verstärkungsschicht, der zweiten Lage der Verstärkungsschicht und der dritten Lage der Verstärkungsschicht durch die dritte Heizeinrichtung hindurchgeführt werden. Insbesondere das mit der dritten Lage der Verstärkungsschicht umwickelte Kunststoffrohr kann durch die dritte Heizeinrichtung hindurchgeführt werden.

Bei dem Verfahren können mehrere, beispielsweise zwei, drei, vier, fünf, sechs oder mehr, dritte Lagen der Verstärkungsschicht aufgebracht werden. Die mehreren dritten Lagen können gleiche, unterschiedliche oder abwechselnde Wickelrichtungen aufweisen. Die mehreren dritten Lagen können mit der vorhergehenden Lage konsolidiert werden. Dabei kann jede dritte Lage einzeln konsolidiert werden oder es können mehrere, beispielsweise zwei, drei oder mehr, dritte Lagen, zusammen, insbesondere mittels der dritten Heizeinrichtung und/oder in einem Schritt, konsolidiert werden.

Beispielsweise können zwei dritte Lagen der Verstärkungsschicht im Wesentlichen gleichzeitig oder, insbesondere direkt bzw. unmittelbar hintereinander aufgebracht werden. Das Aufbringen kann wie vorstehend und oder nachfolgend beschrieben erfolgen. Das Aufbringen bzw. Wickeln / Umwickeln kann insbesondere mittels einer vierspuligen Wickelvorrichtung, wie Bandierer erfolgen. Dabei können die beiden dritten Lagen der Verstärkungsschicht in gleicher Wickelrichtung oder in im Wesentlichen entgegengesetzter Wickelrichtung aufgebracht werden. Die zwei dritten Lagen der Verstärkungsschicht können unmittelbar hintereinander aufgebracht und dann zusammen in einem Schritt konsolidiert werden. Dies kann insbesondere erfolgen, bevor weitere dritte Lagen aufgebracht werden. Zumindest die beiden dritten Lagen der Verstärkungsschicht können bei der Konsolidierung auf die dritte Temperatur gebracht werden, die zu einer zumindest teilweisen Aufschmelzung der beiden dritten Lagen der Verstärkungsschicht führt, so dass die beiden dritten Lagen der Verstärkungsschicht und die vorhergehende Lage der Verstärkungsschicht miteinander fest, insbesondere schmelzverbundartig, verbunden werden. Nach dem Konsolidieren der beiden dritten Lagen der Verstärkungsschicht können weitere dritte Lagen der Verstärkungsschicht aufgebracht und anschließend entsprechend konsolidiert werden. Beispielsweise können nach dem Konsolidieren der beiden dritten Lagen der Verstärkungsschicht zwei weitere dritte Lagen der Verstärkungsschicht unmittelbar hintereinander aufgebracht und dann zusammen in einem Schritt konsolidiert werden. Danach können dann wiederrum zwei weitere dritte Lagen der Verstärkungsschicht unmittelbar hintereinander aufgebracht und dann zusammen in einem Schritt konsolidiert werden. Dadurch kann ein mehrlagige Verstärkungsschicht gebildet werden. Beispielsweise kann die Verstärkungsschicht vier, sechs, acht, zehn oder mehr Lagen aufweisen, wobei die ersten beiden Lagen, d.h. die ersten beiden radial inneren Lagen, der vorstehend und/oder nachfolgend beschriebenen ersten und zweiten Lage der Verstärkungsschicht entsprechen und alle nachfolgenden Lagen der dritten Lage der Verstärkungsschicht entsprechen können. Alternativ kann/können die vorstehend und/oder nachfolgend beschriebene erste und/oder zweite Lage der Verstärkungsschicht auch die letzten Lagen, d.h., die radial äußeren Lagen, der Verstärkungsschicht sein, wobei die ein oder die mehreren dritten Lagen der Verstärkungsschicht vor dem Aufbringen der ersten und/oder zweiten Lage aufgebracht und konsolidiert werden. Das Aufbringen und Konsolidieren der Lagen der Verstärkungsschicht kann also auch in umgekehrter Reihenfolge erfolgen.

Das Verfahren kann den Schritt umfassen: Aufbringen einer Ummantelung auf die wenigstens eine dritte Lage der Verstärkungsschicht. Die Ummantelung kann nach dem Konsolidieren der wenigstens einen dritten Lage der Verstärkungsschicht aufgebracht werden. Die Ummantelung kann nach dem Konsolidieren der letzten, d.h., radial äußeren, dritten Lage der Verstärkungsschicht aufgebracht werden. Die Ummantelung kann ein Außenrohr, beispielsweise ein flexibles und/oder biegbares Außenrohr, oder ein Schlauch, beispielsweise ein flexibler Schlauch, oder eine Folie, beispielsweise ein flexibler Folienschlauch, sein. Die Ummantelung kann ein Kunststoffschlauch oder eine Kunststofffolie sein. Die Ummantelung kann auch als "Jacket" bezeichnet werden. Die Ummantelung kann aus, beispielsweise thermoplastischem, Kunststoff hergestellt, beispielsweise extrudiert, sein oder werden. Der Kunststoff kann Polyolefin, Polyethylen, Polyethylen mit hoher Dichte (HDPE), Polypropylen oder Polyamid sein oder aufweisen. Die Ummantelung kann extrudiert, wie aufextrudiert, sein oder werden. Beispielsweise kann die Ummantelung mittels eines Extruders und/oder eines Rohrkopfes hergestellt bzw. extrudiert sein oder werden.

Das Verfahren kann zumindest einen Kühlschritt zum Kühlen des Rohrs, beispielsweise nach einer Konsolidierung, umfassen. Das Kühlen kann nach wenigstens einer Konsolidierung erfolgen. Das Kühlen kann direkt und/oder unmittelbar nach dem Konsolidieren erfolgen. Das Kühlen kann nach dem Konsolidieren der letzten Lage der Verstärkungsschicht erfolgen. Die letzte Lage der Verstärkungsschicht kann die zuletzt aufgebrachte Lage der Verstärkungsschicht sein. Ein Kühlen kann beispielsweise nach dem Konsolidieren der wenigstens einen dritten Lage der Verstärkungsschicht erfolgen. Ein Kühlen kann nach dem Konsolidieren eines Paars von zwei dritten Lagen der Verstärkungsschicht erfolgen. Beispielsweise kann ein Kühlen nach jedem Konsolidieren eines Paars von zwei dritten Lagen der Verstärkungsschicht erfolgen. Zusätzlich oder alternativ kann ein Kühlen nach dem Aufbringen der Ummantelung erfolgen. Das Kühlen kann mittels einer Kühleinrichtung erfolgen. Die Kühleinrichtung kann eine Wasserkühlung und/oder Luftkühlung sein. Die Kühleinrichtung kann ausgebildet sein, sowohl zumindest einen Wasserstrahl als auch zumindest einen Luftstrahl zu erzeugen. Der zumindest eine Wasserstrahl und der zumindest eine Luftstrahl können gleichzeitig oder hintereinander erzeugt werden. Beispielsweise kann erst eine Wasserkühlung erfolgen und dann eine Luftkühlung. Der Wasserstrahl kann im Wesentlichen quer und/oder senkrecht auf das Rohr aufgebracht werden. Der Luftstrahl kann im Wesentlichen in eine Richtung quer und/oder entgegengesetzt zur Verfahrensrichtung bzw. Bewegungsrichtung des Rohrs aufgebracht werden. Das Rohr kann durch die Kühleinrichtung hindurchgeführt werden.

Nach dem Abkühlen kann das Rohr bzw. Verbundrohr aufgewickelt werden. Das Aufwickeln kann auf eine Trommelvorrichtung erfolgen. Das Aufwickeln kann mittels zumindest einer Abzugsvorrichtung erfolgen. Die zumindest eine Abzugsvorrichtung kann ein Bandabzug sein.

Ein thermoplastisches Verbundrohr kann ein Kunststoffrohr, wie Innenrohr und/oder Liner, und eine um das Kunststoffrohr herum angeordnete Verstärkungsschicht aufweisen. Das thermoplastische Verbundrohr kann mit dem vorstehend und/oder nachfolgend beschriebenen Verfahren hergestellt sein oder werden. Das thermoplastisches Verbundrohr kann ein flexibles und/oder biegbares thermoplastisches Verbundrohr sein.

Ein thermoplastisches Verbundrohr kann ein Kunststoffrohr, wie Innenrohr und/oder Liner, und eine um das Kunststoffrohr herum angeordnete Verstärkungsschicht aufweisen. Die Verstärkungsschicht kann mit dem Kunststoffrohr fest verbunden, beispielsweise schmelzbundartig verbunden und/oder verschmolzen, sein. Das thermoplastisches Verbundrohr kann ein flexibles und/oder biegbares thermoplastisches Verbundrohr sein. Die Verstärkungsschicht des thermoplastischen Verbundrohrs kann eine erste Lage, eine zweite Lage und zumindest eine dritte Lage aufweisen. Die erste Lage kann ein erstes verstärkendes Band, das im Wesentlichen spiralförmig in einer ersten spiralförmigen Richtung, wie erste Wickelrichtung, so um das Kunststoffrohr gewickelt ist, dass mehrere axial beabstandete Bandsektionen und zwischen diesen Lücken bzw. Spalte ausgebildet sind, und ein zweites verstärkendes Band aufweisen, das im Wesentlichen spiralförmig in der ersten spiralförmigen Richtung, wie erste Wickelrichtung, so um das Kunststoffrohr gewickelt ist, dass mehrere axial beabstandete Bandsektionen ausgebildet sind, die in den Lücken bzw. Spalten des ersten verstärkenden Bands der ersten Lage angeordnet sind. Die zweite Lage kann ein erstes verstärkendes Band, das im Wesentlichen spiralförmig in einer zweiten spiralförmigen Richtung, wie zweite Wickelrichtung, so um die erste Lage gewickelt ist, dass mehrere axial beabstandete Bandsektionen und zwischen diesen Lücken bzw. Spalte ausgebildet sind, und ein zweites verstärkendes Band aufweisen, das im Wesentlichen spiralförmig in der zweiten spiralförmigen Richtung, wie zweite Wickelrichtung, so um die erste Lage gewickelt ist, dass mehrere axial beabstandete Bandsektionen ausgebildet sind, die in den Lücken bzw. Spalten des ersten verstärkenden Bands der zweiten Lage angeordnet sind. Die zumindest eine dritte Lage kann ein erstes verstärkendes Band, das im Wesentlichen spiralförmig in einer dritten spiralförmigen Richtung, wie dritte Wickelrichtung, um die zweite Lage gewickelt ist, und ein zweites verstärkendes Band aufweisen, das im Wesentlichen spiralförmig in der dritten spiralförmigen Richtung, wie dritte Wickelrichtung, so um die zweite Lage gewickelt ist, dass sich das zweite verstärkende Band der dritten Lage und das erste verstärkende Band der dritten Lage abschnittsweise überlappen. Das thermoplastisches Verbundrohr und/oder dessen Verstärkungsschicht bzw. die Lagen der Verstärkungsschicht kann/können wie vorstehend und/oder nachfolgend beschrieben ausgebildet und/oder hergestellt sein oder werden.

Eine Verwendung eines vorstehend und/oder nachfolgend beschriebenen thermoplastischen Verbundrohrs kann für den Transport von Öl, wie Rohöl oder Erdöl, Gas, wie Rohgas oder Erdgas, Wasser, wie Heizwasser, Kühlwasser oder Trinkwasser, Öl-Wasser-Gemisch, Öl-Gas-Gemisch oder anderen aus den genannten Stoffen / Medien kombinierte Gemische sein und/oder dienen.

Mit der Erfindung kann ein verbessertes und/oder robusteres thermoplastisches Verbundrohr zum Transport unterschiedlicher Medien bereitgestellt werden. Das Verbundrohr kann trotz seiner Flexibilität und Biegsamkeit hohen Drücken standhalten und/oder Medien über weite Strecken transportieren.

Nachfolgend werden Ausführungsbeispiele der Erfindung unter Bezugnahme auf Figuren näher beschrieben, dabei zeigen schematisch und beispielhaft:
- Fig. 1: einen ersten Abschnitt einer Herstellungslinie zum Herstellen eines thermoplastischen Verbundrohrs;
- Fig. 2: einen zweiten Abschnitt der Herstellungslinie; und
- Fig. 3: einen dritten Abschnitt der Herstellungslinie.

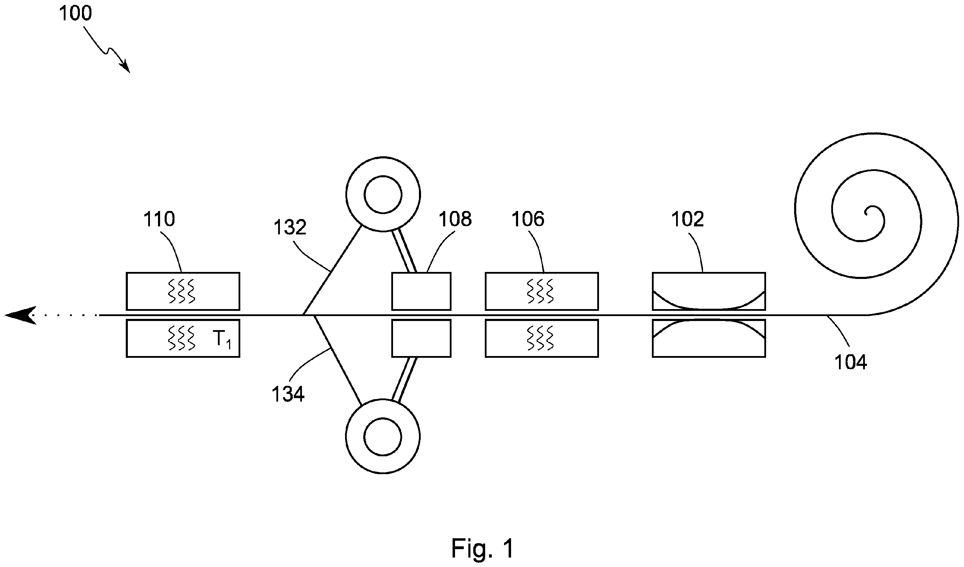

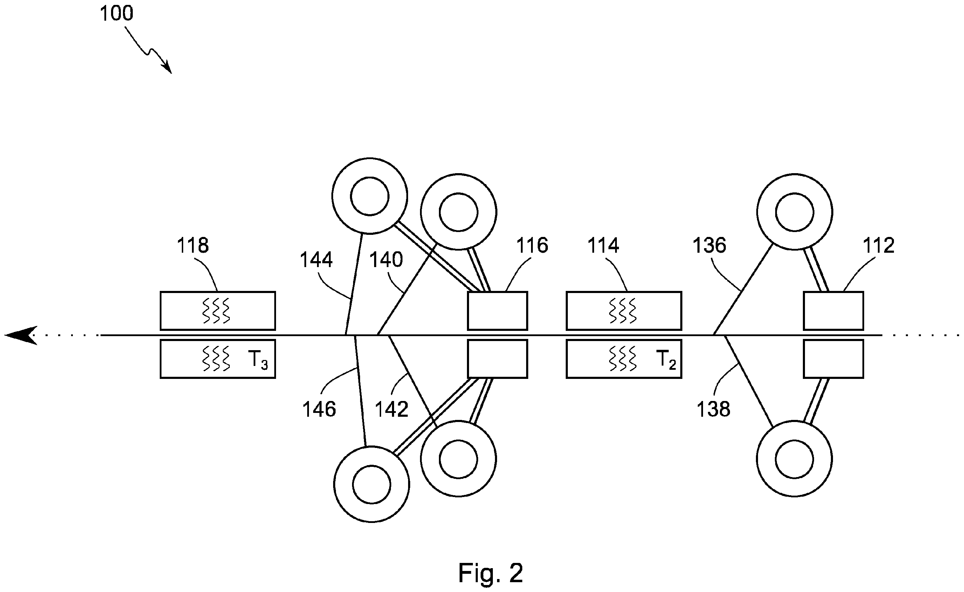

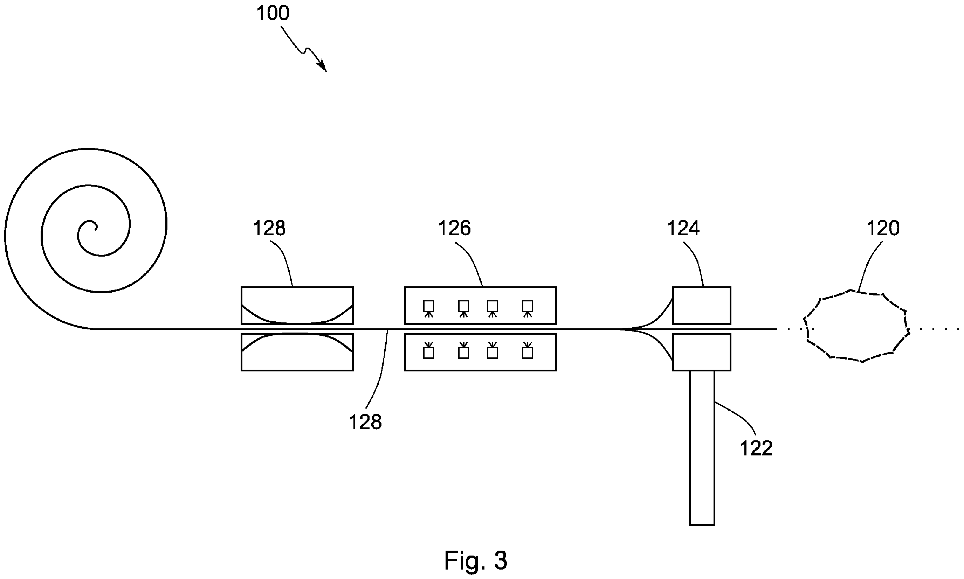

Fign. 1 bis 3 zeigen jeweils Abschnitte einer Herstellungslinie 100. Die Herstellungslinie 100 weist einen ersten Bandabzug 102 zum Abwickeln eines Kunststoffrohrs 104 auf. Dem Bandabzug ist eine Vorheizeinrichtung 106 zum Vorheizen des Kunststoffrohrs 104 nachgeordnet. Die Herstellungslinie 100 weist ferner eine erste zweispulige Wickelvorrichtung 108, wie Bandierer, auf, der der Vorheizeinrichtung 106 nachgeordnet ist. Ferner ist eine erste Heizeinrichtung 110 zum Konsolidieren vorgesehen, die der ersten Wickelvorrichtung 108 nachgeordnet ist. Die Herstellungslinie 100 weist ferner eine zweite zweispulige Wickelvorrichtung 112, wie Bandierer, auf, die der ersten Heizeinrichtung 110 nachgeordnet ist. Nach der zweiten Wickelvorrichtung 112 ist eine zweite Heizeinrichtung 114 zum Konsolidieren vorgesehen. Des Weiteren weist die Herstellungslinie 100 eine dritte vierspulige Wickelvorrichtung 116 auf, der eine dritte Heizeinrichtung 118 nachgeordnet ist. Die Herstellungslinie 100 kann auch weitere dritte vierspulige Wickelvorrichtungen 116 sowie dritte Heizeinrichtungen 118 aufweisen. Dies ist schematisch und allgemein als optionale weitere Einrichtungen 120 bezeichnet bzw. in Fig. 3 dargestellt. Der dritten Heizeinrichtung 118 bzw. den optionalen weiteren Einrichtungen 120 ist eine Extrusionseinrichtung 122, wie Extruder, mit einem Rohrkopf 124 nachgeordnet, der ausgebildet ist, eine Ummantelung herzustellen. Dem Rohrkopfnachfolgend ist eine Kühleinrichtung 126 vorgesehen, auf die ein zweiter Bandabzug 128 zum Aufwickeln des hergestellten Verbundrohrs 130 auf eine Trommeleinrichtung anschließt.

Mit der Herstellungslinie 100 kann ein Verfahren zur Herstellung eines flexiblen, thermoplastischen Verbundrohrs 130 durchgeführt werden. Das Kunststoffrohr 104 wird durch Abwickeln mittels des ersten Bandabzugs 102 bereitgestellt und durch die Vorheizeinrichtung 106 zum Vorheizen des Kunststoffrohrs 104 hindurchgeführt. Das Kunststoffrohr 104 kann aus thermoplastischem Kunststoff, wie Polyolefin, Polyethylen, Polyethylen mit hoher Dichte (HDPE), Polypropylen oder Polyamid hergestellt, insbesondere extrudiert, sein.

Bei dem Verfahren wird eine erste Lage einer Verstärkungsschicht auf das Kunststoffrohr 104 mittels der ersten Wickelvorrichtung 108 aufgebracht. Die erste Lage der Verstärkungsschicht weist ein erstes verstärkendes Band 132 und ein zweites verstärkendes Band 134 auf. Das erste verstärkende Band 132 der ersten Lage der Verstärkungsschicht wird mit der ersten Wickelvorrichtung 108 im Wesentlichen spiralförmig in einer ersten spiralförmigen Richtung, wie erste Wickelrichtung, so um das Kunststoffrohr 104 gewickelt, dass mehrere axial beabstandete Bandsektionen und zwischen diesen Lücken bzw. Spalte entstehen. Das zweites verstärkende Band 134 der ersten Lage der Verstärkungsschicht wird mit der ersten Wickelvorrichtung 108 im Wesentlichen spiralförmig in der ersten spiralförmigen Richtung, wie erste Wickelrichtung, so um das Kunststoffrohr 104 gewickelt, dass mehrere axial beabstandete Bandsektionen entstehen, die in den Lücken bzw. Spalten des ersten verstärkenden Bands 132 der ersten Lage der Verstärkungsschicht angeordnet sind. Mit der ersten zweispuligen Wickelvorrichtung 108 wird das erste verstärkende Band 132 der ersten Lage der Verstärkungsschicht und das zweite verstärkende Band 134 der ersten Lage der Verstärkungsschicht somit im Wesentlichen gleichzeitig und, insbesondere unmittelbar hintereinander um das Kunststoffrohr 104 als Monolagenauftrag gewickelt. Dabei sind das erste verstärkende Band 132 der ersten Lage der Verstärkungsschicht und das zweite verstärkende Band 134 der ersten Lage der Verstärkungsschicht in axialer Richtung direkt nebeneinander, insbesondere im Wesentlichen Kante an Kante, und nicht überlappend angeordnet.

Mittels der ersten Heizeinrichtung 110 wird dann die erste Lage der Verstärkungsschicht mit dem Kunststoffrohr 104 konsolidiert, wobei zumindest die erste Lage der Verstärkungsschicht auf eine erste Temperatur T₁ gebracht wird, die zu einer zumindest teilweisen Aufschmelzung der ersten Lage der Verstärkungsschicht führt, so dass die erste Lage der Verstärkungsschicht und das Kunststoffrohr 104 miteinander fest, insbesondere schmelzverbundartig, verbunden werden.

Sodann wird eine zweite Lage der Verstärkungsschicht auf die erste Lage der Verstärkungsschicht mittels der zweiten Wickelvorrichtung 112 aufgebracht. Die zweite Lage der Verstärkungsschicht weist ein erstes verstärkendes Band 136 und ein zweites verstärkendes Band 138 auf. Das erste verstärkende Band 136 der zweiten Lage der Verstärkungsschicht wird mit der zweiten Wickelvorrichtung 112 im Wesentlichen spiralförmig in einer zweiten spiralförmigen Richtung, wie zweite Wickelrichtung, so um die erste Lage der Verstärkungsschicht gewickelt, dass mehrere axial beabstandete Bandsektionen und zwischen diesen Lücken bzw. Spalte entstehen. Das zweite verstärkende Band 138 der zweiten Lage der Verstärkungsschicht wird mit der zweiten Wickelvorrichtung 112 im Wesentlichen spiralförmig in der zweiten spiralförmigen Richtung, wie zweite Wickelrichtung, so um die erste Lage der Verstärkungsschicht gewickelt, dass mehrere axial beabstandete Bandsektionen entstehen, die in den Lücken bzw. Spalten des ersten verstärkenden Bands 136 der zweiten Lage der Verstärkungsschicht angeordnet sind. Die zweite spiralförmige Richtung bzw. zweite Wickelrichtung ist im Wesentlichen entgegengesetzt zur ersten spiralförmigen Richtung bzw. ersten Wickelrichtung. Mit der zweiten zweispuligen Wickelvorrichtung 112 wird das erste verstärkende Band 136 der zweiten Lage der Verstärkungsschicht und das zweite verstärkende Band 138 der zweiten Lage der Verstärkungsschicht somit im Wesentlichen gleichzeitig und, insbesondere unmittelbar, hintereinander um das Kunststoffrohr 104 als Monolagenauftrag auf die erste Lage der Verstärkungsschicht gewickelt. Dabei sind das erste verstärkende Band 136 der zweiten Lage der Verstärkungsschicht und das zweite verstärkende Band 138 der zweiten Lage der Verstärkungsschicht in axialer Richtung direkt nebeneinander, insbesondere im Wesentlichen Kante an Kante, und nicht überlappend angeordnet.

Mittels der zweiten Heizeinrichtung 114 wird dann die zweite Lage der Verstärkungsschicht mit zumindest der ersten Lage der Verstärkungsschicht konsolidiert, wobei zumindest die zweite Lage der Verstärkungsschicht auf eine zweite Temperatur T₂ gebracht wird, die zu einer zumindest teilweisen Aufschmelzung der zweiten Lage der Verstärkungsschicht führt, so dass die zweite Lage der Verstärkungsschicht und die erste Lage der Verstärkungsschicht miteinander fest, insbesondere schmelzverbundartig, verbunden werden. Die erste Temperatur T₁ und die zweite Temperatur T₂können im Wesentlichen gleich sein.

Sodann wird eine erste dritte Lage der Verstärkungsschicht auf die zweite Lage der Verstärkungsschicht aufgebracht. Die erste dritte Lage der Verstärkungsschicht weist ein erstes verstärkendes Band 140 und ein zweites verstärkendes Band 142 auf. Das erste verstärkende Band 140 der ersten dritten Lage der Verstärkungsschicht wird mit der dritten, vierspuligen Wickelvorrichtung 116 im Wesentlichen spiralförmig in einer dritten spiralförmigen Richtung, wie dritte Wickelrichtung, um die zweite Lage der Verstärkungsschicht gewickelt. Das zweite verstärkende Band 142 der ersten dritten Lage der Verstärkungsschicht wird mit der dritten, vierspuligen Wickelvorrichtung 116 im Wesentlichen spiralförmig in der dritten spiralförmigen Richtung, wie dritte Wickelrichtung, so um die zweite Lage der Verstärkungsschicht gewickelt, dass sich das zweite verstärkende Band 142 der ersten dritten Lage der Verstärkungsschicht und das erste verstärkende Band 140 der ersten dritten Lage der Verstärkungsschicht abschnittsweise überlappen. Dabei kann das erste verstärkende Band 140 der ersten dritten Lage der Verstärkungsschicht und das zweite verstärkende Band 142 der ersten dritten Lage der Verstärkungsschicht einen Überlappungsbereich aufweisen bzw. bilden, der im Wesentlichen über der Naht der ersten und/oder zweiten Lage der Verstärkungsschicht angeordnet ist. Der Überlapp kann etwa 10% bis 70%, insbesondere etwa 40% bis 60%, vorzugsweise etwa 50%, insbesondere der Bandbreite, betragen. Das erste verstärkende Band 140 der ersten dritten Lage der Verstärkungsschicht und das zweite verstärkende Band 142 der ersten dritten Lage der Verstärkungsschicht wird im Wesentlichen gleichzeitig und, insbesondere unmittelbar, hintereinander um das Kunststoffrohr 104 als Doppellagenauftrag auf die zweite Lage der Verstärkungsschicht gewickelt. Dabei kann die dritte spiralförmige Richtung bzw. dritte Wickelrichtung im Wesentlichen der ersten spiralförmigen Richtung bzw. ersten Wickelrichtung oder im Wesentlichen der zweiten spiralförmigen Richtung bzw. zweiten Wickelrichtung entsprechen.

Unmittelbar nach dem Aufbringen der ersten dritten Lage der Verstärkungsschicht wird, insbesondere ohne vorheriges Konsolidieren, mittels der dritten, vierspuligen Wickelvorrichtung 116 eine zweite dritte Lage der Verstärkungsschicht auf die erste dritte Lage der Verstärkungsschicht aufgebracht. Die zweite dritte Lage der Verstärkungsschicht weist ein erstes verstärkendes Band 144 und ein zweites verstärkendes Band 146 auf. Das erste verstärkende Band 144 und das zweite verstärkende Band 146 der zweiten dritten Lage der Verstärkungsschicht wird in gleicher Weise wie das erste verstärkende Band 140 und das zweite verstärkende Band 144 der ersten dritten Lage der Verstärkungsschicht aufgebracht. Die Wickelrichtungen der ersten dritten Lage der Verstärkungsschicht und der zweiten dritten Lage der Verstärkungsschicht können gleich oder unterschiedlich, beispielsweise entgegengesetzt, sein. Im vorliegenden Ausführungsbeispiel werden somit zwei dritte Lagen der Verstärkungsschicht mittels der vierspuligen Wickelvorrichtung 116 im Wesentlichen gleichzeitig und, insbesondere unmittelbar, hintereinander als Doppellagenauftrag aufgebracht.

Sodann werden die erste und zweite dritte Lage der Verstärkungsschicht bzw. das erste und zweite verstärkende Band 140, 142 der ersten dritten Lage der Verstärkungsschicht und das erste und zweite verstärkende Band 144, 146 der zweiten dritten Lage der Verstärkungsschicht zusammen in einem Schritt mittels der dritten Heizeinrichtung 118 mit zumindest der zweiten Lage der Verstärkungsschicht konsolidiert, und zwar insbesondere bevor weitere dritte Lagen, beispielsweise mittels der optionalen weiteren Einrichtungen 120, aufgebracht werden. Zumindest die beiden dritten Lagen der Verstärkungsschicht werden dabei auf eine dritte Temperatur T₃ gebracht, die zu einer zumindest teilweisen Aufschmelzung der beiden dritten Lagen der Verstärkungsschicht führt, so dass die beiden dritten Lagen der Verstärkungsschicht und die vorhergehende, hier zweite, Lage der Verstärkungsschicht miteinander fest, insbesondere schmelzverbundartig, verbunden werden. Die dritte Temperatur T₃ ist im vorliegenden Ausführungsbeispiel größer als die erste Temperatur T₁ und größer als die zweite Temperatur T₂.

Die verstärkenden Bänder der ersten, zweiten und dritten Lagen der Verstärkungsschicht können jeweils ein verstärkendes Band sein, welches mit Kunststoff, wie Polyolefin, Polyethylen, Polyethylen mit hoher Dichte (HDPE), Polypropylen oder Polyamid, imprägnierte und/oder beschichtete, insbesondere unidirektional angeordnete, Fasern, wie Glasfasern und/oder Kunststofffasern und/oder Kohlefasern und/oder Aramidfasern, aufweist.

Nach dem Konsolidieren der beiden dritten Lagen der Verstärkungsschicht wird mittels der Extrusionseinrichtung 122 und mittels des Rohrkopfs 124 auf das Rohr bzw. auf die zweite dritte Lage der Verstärkungsschicht eine Ummantelung aufgebracht. Im Anschluss wird das ummantelte Rohr mittels der Kühleinrichtung 126 gekühlt. Die Kühleinrichtung 126 kann eine Luft- und/oder Wasserkühlung sein. Sodann wird das erzeugte thermoplastische Verbundrohr 130 mittels des zweiten Bandabzugs 128 auf eine Trommeleinrichtung aufgewickelt.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert und/oder kombiniert werden.

### Bezugszeichen

- 100: Herstellungslinie
- 102: erster Bandabzug
- 104: Kunststoffrohr
- 106: Vorheizeinrichtung
- 108: erste Wickelvorrichtung
- 110: erste Heizeinrichtung
- 112: zweite Wickelvorrichtung
- 114: zweite Heizeinrichtung
- 116: dritte Wickelvorrichtung
- 118: dritte Heizeinrichtung
- 120: optionale weitere Einrichtungen
- 122: Extrusionseinrichtung
- 124: Rohrkopf
- 126: Kühleinrichtung
- 128: zweiter Bandabzug
- 130: Verbundrohr
- 132: erstes verstärkendes Band der ersten Lage
- 134: zweites verstärkendes Band der ersten Lage
- 136: erstes verstärkendes Band der zweiten Lage
- 138: zweites verstärkendes Band der zweiten Lage
- 140: erstes verstärkendes Band der ersten dritten Lage
- 142: zweites verstärkendes Band der ersten dritten Lage
- 144: erstes verstärkendes Band der zweiten dritten Lage
- 146: zweites verstärkendes Band der zweiten dritten Lage

- T₁: erste Temperatur
- T₂: zweite Temperatur
- T₃: dritte Temperatur

## Patentansprüche

1. Verfahren zur Herstellung eines flexiblen, thermoplastischen Verbundrohrs (130), wobei das Verfahren die folgenden Schritte umfasst:
- Aufbringen einer ersten Lage einer Verstärkungsschicht auf ein Kunststoffrohr (104);
- Konsolidieren der ersten Lage der Verstärkungsschicht mit dem Kunststoffrohr (104), wobei zumindest die erste Lage der Verstärkungsschicht auf eine erste Temperatur (T₁) gebracht wird, die zu einer zumindest teilweisen Aufschmelzung der ersten Lage der Verstärkungsschicht führt, so dass die erste Lage der Verstärkungsschicht und das Kunststoffrohr (104) miteinander fest, insbesondere schmelzverbundartig, verbunden werden;
- Aufbringen einer zweiten Lage der Verstärkungsschicht auf die erste Lage der Verstärkungsschicht;
- Konsolidieren der zweiten Lage der Verstärkungsschicht mit zumindest der ersten Lage der Verstärkungsschicht, wobei zumindest die zweite Lage der Verstärkungsschicht auf eine zweite Temperatur (T₂) gebracht wird, die zu einer zumindest teilweisen Aufschmelzung der zweiten Lage der Verstärkungsschicht führt, so dass die zweite Lage der Verstärkungsschicht und die erste Lage der Verstärkungsschicht miteinander fest, insbesondere schmelzverbundartig, verbunden werden;
- Aufbringen wenigstens einer dritten Lage der Verstärkungsschicht auf die zweite Lage der Verstärkungsschicht;
- Konsolidieren der wenigstens einen dritten Lage der Verstärkungsschicht mit zumindest der zweiten Lage der Verstärkungsschicht, wobei zumindest die dritte Lage der Verstärkungsschicht auf eine dritte Temperatur (T₃) gebracht wird, die zu einer zumindest teilweisen Aufschmelzung der dritten Lage der Verstärkungsschicht führt, so dass die dritte Lage der Verstärkungsschicht und die zweite Lage der Verstärkungsschicht miteinander fest, insbesondere schmelzverbundartig, verbunden werden, **dadurch gekennzeichnet, dass** die dritte Temperatur (T₃) größer ist als die erste und/oder zweite Temperatur (T₁, T₂).

2. Verfahren nach Anspruch 1, **dadurch gekennzeichnet, dass** die erste Temperatur (T₁) und die zweite Temperatur (T₂) im Wesentlichen gleich sind.

3. Verfahren nach wenigstens einem der vorhergehenden Ansprüche, **dadurch gekennzeichnet, dass** die erste Lage der Verstärkungsschicht ein erstes verstärkendes Band (132) aufweist, das im Wesentlichen spiralförmig in einer ersten spiralförmigen Richtung, wie erste Wickelrichtung, so um das Kunststoffrohr (104) gewickelt wird, dass mehrere axial beabstandete Bandsektionen und zwischen diesen Lücken bzw. Spalte entstehen, und dass die erste Lage der Verstärkungsschicht ein zweites verstärkendes Band (134) aufweist, das im Wesentlichen spiralförmig in der ersten spiralförmigen Richtung, wie erste Wickelrichtung, so um das Kunststoffrohr (104) gewickelt wird, dass mehrere axial beabstandete Bandsektionen entstehen, die in den Lücken bzw. Spalten des ersten verstärkenden Bands (132) der ersten Lage der Verstärkungsschicht angeordnet sind.

4. Verfahren nach Anspruch 3, **dadurch gekennzeichnet, dass** das erste verstärkende Band (132) der ersten Lage der Verstärkungsschicht und das zweite verstärkende Band (134) der ersten Lage der Verstärkungsschicht im Wesentlichen gleichzeitig oder, insbesondere unmittelbar, hintereinander um das Kunststoffrohr (104) gewickelt werden, insbesondere mittels einer zweispuligen Wickelvorrichtung (108), wie Bandierer.

5. Verfahren nach Anspruch 3 oder 4, **dadurch gekennzeichnet, dass** das erste verstärkende Band (132) der ersten Lage der Verstärkungsschicht und das zweite verstärkende Band (134) der ersten Lage der Verstärkungsschicht, insbesondere in axialer Richtung, direkt nebeneinander, insbesondere im Wesentlichen Kante an Kante, und/oder nicht überlappend angeordnet werden.

6. Verfahren nach wenigstens einem der vorhergehenden Ansprüche, **dadurch gekennzeichnet, dass** die zweite Lage der Verstärkungsschicht ein erstes verstärkendes Band (136) aufweist, das im Wesentlichen spiralförmig in einer zweiten spiralförmigen Richtung, wie zweite Wickelrichtung, so um die erste Lage der Verstärkungsschicht gewickelt wird, dass mehrere axial beabstandete Bandsektionen und zwischen diesen Lücken bzw. Spalte entstehen, und dass die zweite Lage der Verstärkungsschicht ein zweites verstärkendes Band (138) aufweist, das im Wesentlichen spiralförmig in der zweiten spiralförmigen Richtung, wie zweite Wickelrichtung, so um die erste Lage der Verstärkungsschicht gewickelt wird, dass mehrere axial beabstandete Bandsektionen entstehen, die in den Lücken bzw. Spalten des ersten verstärkenden Bands (136) der zweiten Lage der Verstärkungsschicht angeordnet sind.

7. Verfahren nach Anspruch 6, **dadurch gekennzeichnet, dass** das erste verstärkende Band (136) der zweiten Lage der Verstärkungsschicht und das zweite verstärkende Band (138) der zweiten Lage der Verstärkungsschicht im Wesentlichen gleichzeitig oder, insbesondere unmittelbar, hintereinander um die erste Lage der Verstärkungsschicht gewickelt werden, insbesondere mittels einer zweispuligen Wickelvorrichtung (112), wie Bandierer.

8. Verfahren nach Anspruch 6 oder 7, **dadurch gekennzeichnet, dass** das erste verstärkende Band (136) der zweiten Lage der Verstärkungsschicht und das zweite verstärkende Band (138) der zweiten Lage der Verstärkungsschicht, insbesondere in axialer Richtung, direkt nebeneinander, insbesondere im Wesentlichen Kante an Kante, und/oder nicht überlappend angeordnet werden.

9. Verfahren nach wenigstens einem der vorhergehenden Ansprüche 6 bis 8, **dadurch gekennzeichnet, dass** die zweite spiralförmige Richtung bzw. zweite Wickelrichtung im Wesentlichen entgegengesetzt zur ersten spiralförmigen Richtung bzw. ersten Wickelrichtung ist.

10. Verfahren nach wenigstens einem der vorhergehenden Ansprüche, **dadurch gekennzeichnet, dass** die dritte Lage der Verstärkungsschicht ein erstes verstärkendes Band (140, 144) aufweist, das im Wesentlichen spiralförmig in einer dritten spiralförmigen Richtung, wie dritte Wickelrichtung, um die zweite Lage der Verstärkungsschicht gewickelt wird, und dass die dritte Lage der Verstärkungsschicht ein zweites verstärkendes Band (142, 146) aufweist, das im Wesentlichen spiralförmig in der dritten spiralförmigen Richtung, wie dritte Wickelrichtung, so um die zweite Lage der Verstärkungsschicht gewickelt wird, dass sich das zweite verstärkende Band (142, 146) der dritten Lage der Verstärkungsschicht und das erste verstärkende Band (140, 144) der dritten Lage der Verstärkungsschicht abschnittsweise überlappen.

11. Verfahren nach Anspruch 10, **dadurch gekennzeichnet, dass** das erste verstärkende Band (140, 144) der dritten Lage der Verstärkungsschicht und das zweite verstärkende Band (142, 146) der dritten Lage der Verstärkungsschicht im Wesentlichen gleichzeitig oder, insbesondere unmittelbar, hintereinander um die zweite Lage der Verstärkungsschicht gewickelt werden, insbesondere mittels einer zweispuligen oder vierspuligen Wickelvorrichtung, wie Bandierer.

12. Verfahren nach Anspruch 10 oder 11, **dadurch gekennzeichnet, dass** die dritte spiralförmige Richtung bzw. dritte Wickelrichtung im Wesentlichen der ersten spiralförmigen Richtung bzw. ersten Wickelrichtung oder im Wesentlichen der zweiten spiralförmigen Richtung bzw. zweiten Wickelrichtung entspricht.

13. Verfahren nach wenigstens einem der vorhergehenden Ansprüche 10 bis 12, **dadurch gekennzeichnet, dass** das erste verstärkende Band (140, 144) der dritten Lage der Verstärkungsschicht und das zweite verstärkende Band (142, 146) der dritten Lage der Verstärkungsschicht einen Überlappungsbereich aufweisen, der im Wesentlichen über der Naht der ersten und/oder zweiten Lage der Verstärkungsschicht angeordnet ist.

14. Verfahren nach wenigstens einem der vorhergehenden Ansprüche 10 bis 13, **dadurch gekennzeichnet, dass** der Überlapp etwa 10% bis 70%, insbesondere etwa 40% bis 60%, vorzugsweise etwa 50%, insbesondere der Bandbreite, beträgt.

15. Verfahren nach wenigstens einem der vorhergehenden Ansprüche 3 bis 14, **dadurch gekennzeichnet, dass** das erste verstärkende Band (132) der ersten Lage der Verstärkungsschicht und/oder das zweite verstärkende Band (134) der ersten Lage der Verstärkungsschicht und/oder das erste verstärkende Band (136) der zweiten Lage der Verstärkungsschicht und/oder das zweite verstärkende Band (138) der zweiten Lage der Verstärkungsschicht und/oder das erste verstärkende Band (140, 144) der dritten Lage der Verstärkungsschicht und/oder das zweite verstärkende Band (142, 146) der dritten Lage der Verstärkungsschicht ein verstärkendes Band ist, welches mit Kunststoff, wie Polyolefin, Polyethylen, Polyethylen mit hoher Dichte (HDPE), Polypropylen oder Polyamid, imprägnierte und/oder beschichtete, insbesondere unidirektional angeordnete, Fasern, wie Glasfasern und/oder Kunststofffasern und/oder Kohlefasern und/oder Aramidfasern, aufweist.

16. Verfahren nach wenigstens einem der vorhergehenden Ansprüche, **dadurch gekennzeichnet, dass** das Kunststoffrohr (1 04) aus thermoplastischem Kunststoff, wie Polyolefin, Polyethylen, Polyethylen mit hoher Dichte (HDPE), Polypropylen oder Polyamid hergestellt, insbesondere extrudiert, ist oder wird.

17. Verfahren nach wenigstens einem der vorhergehenden Ansprüche, **dadurch gekennzeichnet, dass** mehrere, insbesondere zwei, drei, vier, fünf, sechs oder mehr, dritte Lagen der Verstärkungsschicht aufgebracht und mit der vorhergehenden Lage konsolidiert werden.

18. Verfahren nach Anspruch 17, **dadurch gekennzeichnet, dass** zwei dritte Lagen der Verstärkungsschicht im Wesentlichen gleichzeitig oder, insbesondere unmittelbar, hintereinander aufgebracht werden, insbesondere mittels einer vierspuligen Wickelvorrichtung, wie Bandierer, und/oder dass zwei dritte Lagen der Verstärkungsschicht in gleicher Wickelrichtung oder in im Wesentlichen entgegengesetzter Wickelrichtung aufgebracht werden.

19. Verfahren nach Anspruch 17 oder 18, **dadurch gekennzeichnet, dass** zwei dritte Lagen der Verstärkungsschicht unmittelbar hintereinander aufgebracht und dann zusammen in einem Schritt konsolidiert werden, insbesondere bevor weitere dritte Lagen aufgebracht werden, wobei zumindest die beiden dritten Lagen der Verstärkungsschicht auf die dritte Temperatur (T₃) gebracht werden, die zu einer zumindest teilweisen Aufschmelzung der beiden dritten Lagen der Verstärkungsschicht führt, so dass die beiden dritten Lagen der Verstärkungsschicht und die vorhergehende Lage der Verstärkungsschicht miteinander fest, insbesondere schmelzverbundartig, verbunden werden.

20. Verfahren nach wenigstens einem der vorhergehenden Ansprüche, **dadurch gekennzeichnet, dass** nach dem Konsolidieren der wenigstens einen dritten Lage der Verstärkungsschicht eine Ummantelung aufgebracht, insbesondere extrudiert, wie aufextrudiert, wird, und/oder dass nach wenigstens einer Konsolidierung, insbesondere nach dem Konsolidieren der wenigstens einen dritten Lage der Verstärkungsschicht, ein Kühlen des Rohrs, insbesondere mittels einer Kühleinrichtung (126), erfolgt.

## Claims

1. A method of manufacturing a flexible thermoplastic composite pipe (130), the method comprising the steps of:
- applying a first layer of a reinforcing layer to a plastic pipe (104);
- consolidating the first layer of the reinforcing layer with the plastic pipe (104), wherein at least the first layer of the reinforcing layer is brought to a first temperature (T₁) which leads to at least partial melting of the first layer of the reinforcing layer, so that the first layer of the reinforcing layer and the plastic pipe (104) are firmly bonded to one another, in particular in the manner of a fusion bond;
- applying a second layer of the reinforcing layer to the first layer of the reinforcing layer;
- consolidating the second layer of the reinforcing layer with at least the first layer of the reinforcing layer, wherein at least the second layer of the reinforcing layer is brought to a second temperature (T₂), which leads to at least partial melting of the second layer of the reinforcing layer, so that the second layer of the reinforcing layer and the first layer of the reinforcing layer are firmly bonded to one another, in particular in the manner of a fusion bond;
- applying at least one third layer of the reinforcing layer to the second layer of the reinforcing layer;
- consolidating the at least one third layer of the reinforcing layer with at least the second layer of the reinforcing layer, wherein at least the third layer of the reinforcing layer is brought to a third temperature (T₃), which leads to at least partial melting of the third layer of the reinforcing layer, so that the third layer of the reinforcing layer and the second layer of the reinforcing layer are firmly bonded to one another, in particular in the manner of a fusion bond, **characterized in that** the third temperature (T₃) is greater than the first and/or second temperature (T₁ , T₂).

2. The method according to claim 1, **characterized in that** the first temperature (T₁) and the second temperature (T₂) are substantially the same.

3. The method according to at least one of the preceding claims, **characterized in that** the first layer of the reinforcing layer comprises a first reinforcing tape (132) which is wound substantially spirally around the plastic pipe (104) in a first spiral direction, e.g. first winding direction, such that a plurality of axially spaced tape sections and spaces or gaps between them are formed, and **in that** the first layer of the reinforcing layer has a second reinforcing tape (134) which is wound substantially spirally in the first spiral direction, e.g. the first winding direction, around the plastic tube (104) in such a way that a plurality of axially spaced tape sections are formed which are arranged in the spaces or gaps of the first reinforcing tape (132) of the first layer of the reinforcing layer.

4. The method according to claim 3, **characterized in that** the first reinforcing tape (132) of the first layer of the reinforcing layer and the second reinforcing tape (134) of the first layer of the reinforcing layer are wound around the plastic tube (104) substantially simultaneously or, in particular directly, one behind the other, in particular by means of a two-coil winding device (108), such as a taping device.

5. The method according to claim 3 or 4, **characterized in that** the first reinforcing tape (132) of the first layer of the reinforcing layer and the second reinforcing tape (134) of the first layer of the reinforcing layer are arranged, in particular in the axial direction, directly next to one another, in particular substantially edge to edge, and/or not overlapping.

6. The method according to at least one of the preceding claims, **characterized in that** the second layer of the reinforcing layer comprises a first reinforcing tape (136) which is wound substantially spirally in a second spiral direction, e.g. second winding direction, around the first layer of the reinforcing layer so as to form a plurality of axially spaced tape sections and spaces or gaps between them, and **in that** the second layer of the reinforcing layer has a second reinforcing tape (138) which is wound substantially spirally in the second spiral direction, e.g. the second winding direction, around the first layer of the reinforcing layer in such a way that a plurality of axially spaced tape sections are formed which are arranged in the spaces or gaps of the first reinforcing tape (136) of the second layer of the reinforcing layer.

7. The method according to claim 6, **characterized in that** the first reinforcing tape (136) of the second layer of the reinforcing layer and the second reinforcing tape (138) of the second layer of the reinforcing layer are wound around the first layer of the reinforcing layer substantially simultaneously or, in particular directly, one behind the other, in particular by means of a two-coil winding device (112), such as a taping device.

8. The method according to claim 6 or 7, **characterized in that** the first reinforcing tape (136) of the second layer of the reinforcing layer and the second reinforcing tape (138) of the second layer of the reinforcing layer are arranged, in particular in the axial direction, directly next to one another, in particular substantially edge to edge, and/or not overlapping.

9. The method according to at least one of the preceding claims 6 to 8, **characterized in that** the second spiral direction or second winding direction is substantially opposite to the first spiral direction or first winding direction.

10. The method according to at least one of the preceding claims, **characterized in that** the third layer of the reinforcing layer comprises a first reinforcing tape (140, 144) which is wound substantially spirally around the second layer of the reinforcing layer in a third spiral direction, e.g. third winding direction, and **in that** the third layer of the reinforcing layer comprises a second reinforcing tape (142, 146) which is wound substantially spirally in the third spiral direction, e.g. the third winding direction, around the second layer of the reinforcing layer in such a way that the second reinforcing tape (142, 146) of the third layer of the reinforcing layer and the first reinforcing tape (140, 144) of the third layer of the reinforcing layer overlap in sections.

11. The method according to claim 10, **characterized in that** the first reinforcing tape (140, 144) of the third layer of the reinforcing layer and the second reinforcing tape (142, 146) of the third layer of the reinforcing layer are wound around the second layer of the reinforcing layer substantially simultaneously or, in particular directly, one behind the other, in particular by means of a two-coil or four-coil winding device, such as a taping device.

12. The method according to claim 10 or 11, **characterized in that** the third spiral direction or third winding direction substantially corresponds to the first spiral direction or first winding direction or substantially corresponds to the second spiral direction or second winding direction.

13. The method according to at least one of the preceding claims 10 to 12, **characterized in that** the first reinforcing tape (140, 144) of the third layer of the reinforcing layer and the second reinforcing tape (142, 146) of the third layer of the reinforcing layer have an overlapping region which is arranged substantially over the seam of the first and/or second layer of the reinforcing layer.

14. The method according to at least one of the preceding claims 10 to 13, **characterized in that** the overlap is approximately 10% to 70%, in particular approximately 40% to 60%, preferably approximately 50%, in particular of the bandwidth.

15. The method according to at least one of the preceding claims 3 to 14, **characterized in that** the first reinforcing tape (132) of the first layer of the reinforcing layer and/or the second reinforcing tape (134) of the first layer of the reinforcing layer and/or the first reinforcing tape (136) of the second layer of the reinforcing layer and/or the second reinforcing tape (138) of the second layer of the reinforcing layer and/or the first reinforcing tape (140, 144) of the third layer of the reinforcing layer and/or the second reinforcing tape (142, 146) of the third layer of the reinforcing layer is a reinforcing tape which has, in particular unidirectionally arranged, fibres, such as glass fibres and/or plastic fibres and/or carbon fibres and/or aramid fibres, impregnated and/or coated with plastic, such as polyolefin, polyethylene, high-density polyethylene (HDPE), polypropylene or polyamide.

16. The method according to at least one of the preceding claims, **characterized in that** the plastic pipe (104) is or is produced, in particular extruded, from thermoplastic material, such as polyolefin, polyethylene, high-density polyethylene (HDPE), polypropylene or polyamide.

17. The method according to at least one of the preceding claims, **characterized in that** several, in particular two, three, four, five, six or more, third layers of the reinforcing layer are applied and consolidated with the preceding layer.

18. The method according to claim 17, **characterized in that** two third layers of the reinforcing layer are applied substantially simultaneously or, in particular directly, one behind the other, in particular by means of a four-coil winding device, such as a taping device, and/or **in that** two third layers of the reinforcing layer are applied in the same winding direction or in substantially opposite winding directions.

19. The method according to claim 17 or 18, **characterized in that** two third layers of the reinforcing layer are applied directly one behind the other and then consolidated together in one step, in particular before further third layers are applied, wherein at least the two third layers of the reinforcing layer are brought to the third temperature (T₃), which leads to at least partial melting of the two third layers of the reinforcing layer, so that the two third layers of the reinforcing layer and the preceding layer of the reinforcing layer are firmly bonded together, in particular in the manner of a fusion bond.

20. The method according to at least one of the preceding claims, **characterized in that** after the consolidation of the at least one third layer of the reinforcing layer, a coating is applied, in particular extruded, such as extruded on, and/or **in that** after at least one consolidation, in particular after the consolidation of the at least one third layer of the reinforcing layer, the pipe is cooled, in particular by means of a cooling device (126).

## Revendications

1. Procédé de fabrication d'un tube composite thermoplastique flexible (130), le procédé comprenant les étapes suivantes:
- application d'une première couche d'une couche de renforcement sur un tube en matière plastique (104) ;
- consolidation de la première couche de la couche de renforcement avec le tube en matière plastique (104), au moins la première couche de la couche de renforcement étant portée à une première température (T₁) qui entraîne une fusion au moins partielle de la première couche de la couche de renforcement, de sorte que la première couche de la couche de renforcement et le tube en matière plastique (104) sont reliés solidement l'un à l'autre, en particulier à la manière d'un composite par fusion;
- application d'une deuxième couche de la couche de renforcement sur la première couche de la couche de renforcement;
- consolidation de la deuxième couche de la couche de renforcement avec au moins la première couche de la couche de renforcement, au moins la deuxième couche de la couche de renforcement étant amenée à une deuxième température (T₂) qui conduit à une fusion au moins partielle de la deuxième couche de la couche de renforcement, de sorte que la deuxième couche de la couche de renforcement et la première couche de la couche de renforcement sont reliées solidement l'une à l'autre, en particulier à la manière d'une liaison par fusion;
- application d'au moins une troisième couche de la couche de renforcement sur la deuxième couche de la couche de renforcement;
- consolider l'au moins une troisième couche de la couche de renforcement avec au moins la deuxième couche de la couche de renforcement, au moins la troisième couche de la couche de renforcement étant portée à une troisième température (T₃) qui conduit à une fusion au moins partielle de la troisième couche de la couche de renforcement, de sorte que la troisième couche de la couche de renforcement et la deuxième couche de la couche de renforcement sont reliées solidement l'une à l'autre, en particulier à la manière d'une liaison par fusion, **caractérisé en ce que** la troisième température (T₃) est supérieure à la première et/ou à la deuxième température (T₁ , T₂).

2. Procédé selon la revendication 1, **caractérisé en ce que** la première température (T₁) et la deuxième température (T₂) sont sensiblement égales.

3. Procédé selon au moins l'une des revendications précédentes, **caractérisé en ce que** la première couche de la couche de renforcement comprend une première bande de renforcement (132) enroulée sensiblement en spirale autour du tube en plastique (104) dans une première direction en spirale, telle qu'une première direction d'enroulement, de manière à former une pluralité de sections de bande espacées axialement et à créer des espaces entre ces sections, et **en ce que** la première couche de la couche de renforcement comprend une deuxième bande de renforcement (134) qui est enroulée sensiblement en spirale dans la première direction en spirale, telle que la première direction d'enroulement, autour du tube en plastique (104) de manière à former une pluralité de sections de bande espacées axialement, qui sont disposées dans les espaces de la première bande de renforcement (132) de la première couche de la couche de renforcement.

4. Procédé selon la revendication 3, **caractérisé en ce que** la première bande de renforcement (132) de la première couche de la couche de renforcement et la deuxième bande de renforcement (134) de la première couche de la couche de renforcement sont enroulées autour du tube en plastique (104) sensiblement simultanément ou, en particulier immédiatement, l'une derrière l'autre, en particulier au moyen d'un dispositif d'enroulement à deux bobines (108), tel que des machines à ruban.

5. Procédé selon la revendication 3 ou 4, **caractérisé en ce que** la première bande de renforcement (132) de la première couche de la couche de renforcement et la deuxième bande de renforcement (134) de la première couche de la couche de renforcement sont disposées, en particulier dans la direction axiale, directement côte à côte, en particulier sensiblement bord à bord, et/ou sans se chevaucher.

6. Procédé selon au moins l'une des revendications précédentes, **caractérisé en ce que** la deuxième couche de la couche de renforcement comprend une première bande de renforcement (136) enroulée sensiblement en spirale autour de la première couche de la couche de renforcement dans une deuxième direction en spirale, telle qu'une deuxième direction d'enroulement, de manière à former une pluralité de sections de bande espacées axialement et des intervalles entre celles-ci, et **en ce que** la deuxième couche de la couche de renforcement comprend une deuxième bande de renforcement (138) qui est enroulée sensiblement en spirale dans la deuxième direction en spirale, comme la deuxième direction d'enroulement, autour de la première couche de la couche de renforcement de manière à former une pluralité de sections de bande espacées axialement qui sont disposées dans les espaces de la première bande de renforcement (136) de la deuxième couche de la couche de renforcement.

7. Procédé selon la revendication 6, **caractérisé en ce que** la première bande de renforcement (136) de la deuxième couche de la couche de renforcement et la deuxième bande de renforcement (138) de la deuxième couche de la couche de renforcement sont enroulées autour de la première couche de la couche de renforcement sensiblement simultanément ou, en particulier immédiatement, l'une derrière l'autre, en particulier au moyen d'un dispositif d'enroulement à deux bobines (112), tel que des rubaneuses.

8. Procédé selon la revendication 6 ou 7, **caractérisé en ce que** la première bande de renforcement (136) de la deuxième couche de la couche de renforcement et la deuxième bande de renforcement (138) de la deuxième couche de la couche de renforcement sont disposées, en particulier dans la direction axiale, directement côte à côte, en particulier sensiblement bord à bord, et/ou sans se chevaucher.

9. Procédé selon l'une au moins des revendications précédentes 6 à 8, **caractérisé en ce que** la deuxième direction en spirale, respectivement la deuxième direction d'enroulement, est sensiblement opposée à la première direction en spirale, respectivement à la première direction d'enroulement.

10. Procédé selon l'une au moins des revendications précédentes, **caractérisé en ce que** la troisième couche de la couche de renforcement comprend une première bande de renforcement (140, 144) enroulée sensiblement en spirale dans une troisième direction en spirale, telle que troisième direction d'enroulement, autour de la deuxième couche de la couche de renforcement, et **en ce que** la troisième couche de la couche de renforcement comprend une deuxième bande de renforcement (142, 146) qui est enroulée sensiblement en spirale dans la troisième direction en spirale, comme la troisième direction d'enroulement, autour de la deuxième couche de la couche de renforcement de telle sorte que la deuxième bande de renforcement (142, 146) de la troisième couche de la couche de renforcement et la première bande de renforcement (140, 144) de la troisième couche de la couche de renforcement se chevauchent par sections.

11. Procédé selon la revendication 10, **caractérisé en ce que** la première bande de renforcement (140, 144) de la troisième couche de la couche de renforcement et la deuxième bande de renforcement (142, 146) de la troisième couche de la couche de renforcement sont enroulées autour de la deuxième couche de la couche de renforcement sensiblement simultanément ou, en particulier immédiatement, l'une derrière l'autre, en particulier au moyen d'un dispositif d'enroulement à deux bobines ou à quatre bobines, tel que des rubaneuses.

12. Procédé selon la revendication 10 ou 11, **caractérisé en ce que** la troisième direction de la spirale ou la troisième direction d'enroulement correspond sensiblement à la première direction de la spirale ou la première direction d'enroulement ou sensiblement à la deuxième direction de la spirale ou la deuxième direction d'enroulement.

13. Procédé selon au moins l'une des revendications précédentes 10 à 12, **caractérisé en ce que** la première bande de renforcement (140, 144) de la troisième couche de la couche de renforcement et la deuxième bande de renforcement (142, 146) de la troisième couche de la couche de renforcement présentent une zone de chevauchement située sensiblement au-dessus de la couture de la première et/ou de la deuxième couche de la couche de renforcement.

14. Procédé selon au moins l'une des revendications précédentes 10 à 13, **caractérisé en ce que** le chevauchement est d'environ 10% à 70%, notamment d'environ 40% à 60%, de préférence d'environ 50%, notamment de la largeur de bande.

15. Procédé selon au moins l'une des revendications précédentes 3 à 14, **caractérisé en ce que** la première bande de renforcement (132) de la première couche de la couche de renforcement et/ou la deuxième bande de renforcement (134) de la première couche de la couche de renforcement et/ou la première bande de renforcement (136) de la deuxième couche de la couche de renforcement et/ou la deuxième bande de renforcement (138) de la deuxième couche de la couche de renforcement et/ou la première bande de renforcement (140, 144) de la troisième couche de la couche de renforcement et/ou la deuxième bande de renforcement (142, 146) de la troisième couche de la couche de renforcement est une bande de renforcement qui présente, en particulier disposées de manière unidirectionnelle, des fibres, telles que des fibres de verre et/ou des fibres de matière plastique et/ou des fibres de carbone et/ou des fibres d'aramide, imprégnées et/ou revêtues avec une matière plastique telle que la polyoléfine, le polyéthylène, le polyéthylène haute densité (HDPE), le polypropylène ou le polyamide.

16. Procédé selon au moins l'une des revendications précédentes, **caractérisé en ce que** le tube plastique (104) est ou sera fabriqué, notamment par extrusion, en matière thermoplastique telle que polyoléfine, polyéthylène, polyéthylène haute densité (PEHD), polypropylène ou polyamide.

17. Procédé selon au moins l'une des revendications précédentes, **caractérisé en ce que** plusieurs, notamment deux, trois, quatre, cinq, six ou plus, troisièmes couches de la couche de renforcement sont appliquées et consolidées avec la couche précédente.

18. Procédé selon la revendication 17, **caractérisé en ce que** deux troisièmes couches de la couche de renforcement sont appliquées sensiblement simultanément ou, en particulier directement, l'une après l'autre, en particulier au moyen d'un dispositif d'enroulement à quatre bobines, tel qu'une machine à ruban, et/ou **en ce que** deux troisièmes couches de la couche de renforcement sont appliquées dans le même sens d'enroulement ou dans des sens d'enroulement sensiblement opposés.

19. Procédé selon la revendication 17 ou 18, **caractérisé en ce que** deux troisièmes couches de la couche de renforcement sont appliquées directement l'une après l'autre et sont ensuite consolidées ensemble en une étape, en particulier avant que d'autres troisièmes couches soient appliquées, au moins les deux troisièmes couches de la couche de renforcement étant portées à la troisième température (T₃), qui conduit à une fusion au moins partielle des deux troisièmes couches de la couche de renforcement, de sorte que les deux troisièmes couches de la couche de renforcement et la couche précédente de la couche de renforcement sont liées solidement l'une à l'autre, en particulier à la manière d'une liaison par fusion.

20. Procédé selon au moins l'une des revendications précédentes, **caractérisé en ce qu'**après la consolidation d'au moins une troisième couche de la couche de renfort, on applique un gainage, notamment par extrusion, tel que sur-extrusion, et/ou **en ce qu'**après au moins une consolidation, notamment après la consolidation d'au moins une troisième couche de la couche de renfort, on effectue un refroidissement du tube, notamment au moyen d'un dispositif de refroidissement (126).
